# EUROPÄISCHE PATENTSCHRIFT

(11) **EP 2 682 445 B1**
(45) Veröffentlichungstag und Bekanntmachung des Hinweises auf die Patenterteilung: **21.01.2015**
(21) Anmeldenummer: 13174483.1
(22) Anmeldetag: 01.07.2013
(51) Int. Cl.: C09K 8/58, C09K 8/60, C11C 3/00, C10L 1/02, C09K 8/592

(54) **Formulierungen auf Basis von Rohglyzerin (R), Celluloseether und Harnstoff, Verfahren zur Förderung von Erdöl aus Erdöllagerstätten mit inhomogener Permeabilität sowie Verfahren zur Herstellung dieser Formulierungen**
Formulations on the basis of raw glycerine (R), cellulose ether and urea, method for promoting crude oil from crude oil storage sites with inhomogeneous permeability and method for producing these formulations
Formulations à base de glycérol brut (R), ester de cellulose et urée, procédé de transport de pétrole à partir de stations de stockage de pétrole ayant une perméabilité hétérogène, ainsi que procédé de fabrication de ces formulations

(30) Priorität: 04.07.2012 EP 12174934
(43) Veröffentlichungstag der Anmeldung: 08.01.2014
(73) Patentinhaber: Wintershall Holding GmbH, 34119 Kassel (DE); Institute of Petroleum Chemistry of the Siberian Branch of the Russian Academy of Sciences, Tomsk 634021 (RU)
(72) Erfinder: Stehle, Vladimir, 34123 Kassel (DE); Liubov, Altunina, 634021 Tomsk (RU); Kuvshinov, Vladimir, 634021 Tomsk (RU)
(74) Vertreter: Ebneth, Marcus

(56) Entgegenhaltungen:
- EP-A1- 2 568 029
- GB-A- 756 672
- US-A- 3 298 436
- US-A- 4 427 556
- US-A1- 2009 143 254
- US-A1- 2011 155 376
- ALTUNINA L K ET AL: "Compsn. increasing oil yield of stratum - contains urea, aluminium chloride or nitrate, water and additionally urotropin, to increase range of application", WPI / THOMSON,, Bd. 1997, Nr. 19, 20. September 1996 (1996-09-20), XP002664757, & RU 2 066 743 C1 (INST KHIM NEFTI SO RAN [SU]) 20. September 1996 (1996-09-20)

## Beschreibung

Die vorliegende Erfindung betrifft Formulierungen (F) auf Basis von Rohglyzerin (R), Celluloseether und Harnstoff, ein Verfahren zur Förderung von Erdöl aus Erdöllagerstätten mit inhomogener Permeabilität sowie ein Verfahren zur Herstellung von Formulierungen (F), die Rohglyzerin (R) enthalten. Die rheologischen Eigenschaften der erfindungsgemäßen Formulierungen (F) sind in breiten Intervallen modifizierbar und lassen sich an die geotechnischen Parameter, die Umweltbedingungen und die Art des Erdöls unterschiedlicher Erdöllagerstätten anpassen.

In natürlichen Erdölvorkommen liegt Erdöl in Hohlräumen poröser Speichergesteine vor, welche zur Erdoberfläche hin von undurchlässigen Deckschichten abgeschlossen sind. Neben Erdöl, inklusive Anteilen von Erdgas, enthält eine Lagerstätte weiterhin mehr oder weniger stark salzhaltiges Wasser. Bei den Hohlräumen kann es sich um sehr feine Hohlräume, Kapillaren, Poren oder dergleichen handeln, beispielsweise um solche mit einem Durchmesser von nur ca. 1 µm; die Formation kann daneben aber auch Bereiche mit Poren größeren Durchmessers und/oder natürliche Brüche aufweisen. In einem Erdölvorkommen können eine oder mehrere ölführende Schichten vorhanden sein.

Nach dem Niederbringen der Bohrung in die ölführenden Schichten fließt das Öl zunächst aufgrund des natürlichen Lagerstättendrucks zu den Förderbohrungen und gelangt eruptiv an die Erdoberfläche. Diese Phase der Erdölförderung wird vom Fachmann Primärförderung genannt. Bei schlechten Lagerstättenbedingungen, wie beispielsweise einer hohen Ölviskosität, schnell abfallendem Lagerstättendruck oder großen Fließwiderständen in den ölführenden Schichten, kommt die Eruptivförderung schnell zum Erliegen. Mit der Primärförderung können im Durchschnitt nur 2 bis 10 % des ursprünglich in der Lagerstätte vorhandenen Öles gefördert werden.

Bei der Erdölförderung unterscheidet man zwischen der primären, sekundären und tertiären Förderung.

Um die Ausbeute zu steigern, werden daher die so genannten sekundären Förderverfahren eingesetzt. Das gebräuchlichste Verfahren der sekundären Erdölförderung ist das Wasserfluten. Dabei wird durch so genannte Injektionsbohrungen Wasser in die ölführenden Schichten eingepresst. Hierdurch wird der Lagerstättendruck künstlich erhöht und das Öl von den Injektionsbohrungen aus zu den Produktionsbohrungen gedrückt. Durch Wasserfluten kann der Ausbeutungsgrad unter bestimmten Bedingungen wesentlich gesteigert werden. Darüber hinaus ist es möglich, die Erdölausbeute durch Maßnahmen der tertiären Ölförderung weiter zu steigern. Bei der tertiären Erdölförderung werden geeignete Chemikalien als Hilfsmittel zur Ölförderung einsetzt. Hierzu gehört das so genannte "Polymerfluten". Beim Polymerfluten presst man durch die Injektionsbohrungen anstelle von Wasser eine wässrige Lösung eines verdickend wirkenden Polymers in die Erdöllagerstätte ein. Durch das Einpressen der Polymerlösung wird das Erdöl durch die besagten Hohlräume in der Formation von der Injektionsbohrung ausgehend in Richtung der Produktionsbohrung gedrückt, und das Erdöl wird schließlich über die Produktionsbohrung gefördert. Aufgrund der erhöhten Viskosität der Polymerlösung, welche an die Viskosität des Erdöls angepasst wird, kann die Polymerlösung nicht mehr oder zumindest nicht so leicht durch Hohlräume durchbrechen wie dies bei reinem Wasser der Fall ist. Dem Wasser nicht zugängliche Teile der Lagerstätte werden durch die Polymerlösung erreicht.

Beim Wasserfluten soll im Idealfalle eine von der Injektionsbohrung ausgehende Wasserfront das Öl gleichmäßig über die gesamte Erdölformation zur Produktionsbohrung drücken. In der Praxis weist eine Erdölformation aber Bereiche mit unterschiedlich hohem Fließwiderstand auf. Neben feinporösen ölgesättigten Speichergesteinen mit einem hohen Fließwiderstand für Wasser existieren auch Bereiche mit niedrigem Fließwiderstand für Wasser, wie beispielsweise natürliche oder künstliche Brüche oder sehr permeable Bereiche im Speichergestein. Bei derartigen permeablen Bereichen kann es sich auch um bereits entölte Bereiche handeln. Beim Wasserfluten fließt das eingepresste Flutwasser naturgemäß hauptsächlich durch Fließwege mit niedrigem Fließwiderstand von der Injektionsbohrung zur Produktionsbohrung. Dies hat zur Folge, dass die feinporösen ölgesättigten Lagerstättenbereiche mit hohem Fließwiderstand nicht mehr geflutet werden, und dass über die Produktionsbohrung zunehmend mehr Wasser und weniger Erdöl gefördert wird. Der Fachmann spricht in diesem Zusammenhang von einer "Verwässerung der Produktion". Die genannten Effekte sind bei viskosen Erdölen besonders ausgeprägt.

Zur Förderung von Erdöl aus Lagerstätten mit hoher Erdölviskosität kann das Erdöl auch durch Einpressen von Heißdampf in der Lagerstätte erwärmt und so die Ölviskosität verringert werden. Wie beim Wasserfluten können aber auch Heißdampf und Dampfkondensat unerwünscht schnell durch hoch permeable Zonen von den Injektionsbohrungen zu den Produktionsbohrungen durchschlagen, wodurch die Effizienz der Förderung reduziert wird.

Zurzeit ist es üblich, bei der Entwicklung von Lagerstätten mit viskosem Öl beide Schritte durchzuführen: Wasserfluten und im Anschluss daran Dampffluten. Das Blockieren der hoch permeablen Kanäle insbesondere während des Dampfflutens ist wegen der sehr hohen Temperaturen in der Umgebung der Injektionsbohrung technologisch schwierig zu realisieren.

Im Stand der Technik sind Maßnahmen bekannt, derartige hoch permeable Zonen zwischen Injektionsbohrungen und Produktionsbohrungen mittels geeigneter Maßnahmen zu schließen. Hierdurch werden hoch permeable Zonen mit geringem Fließwiderstand blockiert und das Flutwasser bzw. der Flutdampf durchströmen wieder die ölgesättigten, niedrig permeablen Schichten. Derartige Maßnahmen sind auch als so genannte "Conformance Control" bekannt. Einen Überblick über Maßnahmen zur "Conformance Control" geben Borling et al. "Pushing out the oil with Conformance Control" in Oilfield Review (1994), Seiten 44 ff.

Zur "Conformance Control" können vergleichsweise niedrig viskose Formulierungen bestimmter chemischer Stoffe eingesetzt werden, die sich leicht in die Formation einpressen lassen, und deren Viskosität erst nach dem Einpressen in die Formation unter den in der Formation herrschenden Bedingungen deutlich ansteigt. Derartige Formulierungen enthalten zur Viskositätssteigerung geeignete anorganische, organische oder polymere Komponenten. Die Viskositätssteigerung der eingepressten Formulierung kann einerseits einfach zeitverzögert auftreten. Es sind aber auch Formulierungen bekannt, bei denen die Viskositätssteigerung im Wesentlichen durch den Temperaturanstieg ausgelöst wird, wenn sich die eingepresste Formulierung in der Lagerstätte allmählich auf die Lagerstättentemperatur erwärmt. Formulierungen, deren Viskosität erst unter Formationsbedingungen ansteigt, sind beispielsweise als "Thermogele" oder "delayed gelling system" bekannt. Diese Formulierungen sind jedoch nur effizient anwendbar in Lagerstätten, deren Temperatur über 60 °C liegt.

SU 1 654 554 A1 offenbart Verfahren zur Ölgewinnung, bei dem Mischungen enthaltend Aluminiumchlorid oder Aluminiumnitrat, Harnstoff und Wasser in die Erdölformationen injiziert werden. Bei den erhöhten Temperaturen in der Formation hydrolysiert der Harnstoff zu Kohlendioxid und Ammoniak. Der entstehende Ammoniak erhöht den pH-Wert des Wassers deutlich, wodurch hochviskoses Aluminiumhydroxidgel ausfällt, das die hoch permeablen Bereiche verstopft.

RU 2 339 803 C2 beschreibt ein Verfahren zum Blockieren hoch permeabler Bereiche in Erdöllagerstätten, bei dem zunächst das Volumen des zu blockierenden, hoch permeablen Bereichs bestimmt wird. Anschließend wird eine wässrige Formulierung enthaltend Carboxymethylcellulose sowie Chromacetat als Vernetzer in den zu blockierenden Bereich injiziert, wobei das Volumen der injizierten Mischung 15 % bezogen auf das Gesamtvolumen des zu blockierenden Bereichs beträgt. Im nächsten Schritt wird eine wässrige Formulierung enthaltend Polyacrylamid und einen Vernetzer injiziert.

L. K. Altunina und V. A. Kushinov, Oil & Gas Science and Technology- Rev. IFP, Vol. 63 (2008), Seiten 37 bis 48 und Altunina L.K., Kuvshinov V.A., Stasyeva L.A. // Thermoreversible Polymer Gels for Increased Efficiency of Cyclic-Steam Well Treatment, - 2006 - 1 CD-ROM, - 68th EAGE Conference & Exhibition "Opportunities in Marine Areas", Paper D030 beschreiben verschiedene Thermogele und deren Verwendung zur Ölförderung, darunter Thermogele auf Basis von Harnstoff und Aluminiumsalz sowie Thermogele auf Basis von Celluloseether.

Die vorstehend beschriebenen gelbildenden Formulierungen stellen "Thermogele" dar, das heißt Formulierungen deren Viskosität mit Zunahme der Temperatur ansteigt. Nachteilig an diesen Thermogelen ist, dass sie nur in Erdöllagerstätten eingesetzt werden können, die Lagerstättentemperaturen von mindestens 60°C aufweisen.

Aufgabe der vorliegenden Erfindung war daher die Bereitstellung von Formulierungen, deren rheologische und physikalische Parameter in breiten Intervallen modifizierbar sind und eine effiziente Profilmodifikation der Flutfront erlauben. Die Formulierungen sollen flexibel sowohl in Erdöllagerstätten mit Lagerstättentemperaturen über 60°C als auch in Erdöllagerstätten mit Lagerstättentemperaturen unterhalb von 60°C einsetzbar seien.

Eine weitere Aufgabe der vorliegenden Erfindung lag in der Bereitstellung eines Verfahrens zur Herstellung dieser Formulierungen sowie in der Bereitstellung eines Verfahrens zur Förderung von Erdöl aus Erdöllagerstätten mit inhomogener Permeabilität unter Verwendung dieser Formulierungen. Die Verfahren zur Förderung von Erdöl sollen dabei sowohl in Erdöllagerstätten anwendbar sein, die Temperaturen oberhalb von 60°C aufweisen, als auch in Erdöllagerstätten, die Temperaturen unterhalb von 60°C aufweisen.

Gelöst wird diese Aufgabe Verfahren zur Förderung von Erdöl aus unterirdischen Erdöllagerstätten, in welche mindestens eine Injektionsbohrung und mindestens eine Produktionsbohrung abgeteuft sind, umfassend mindestens die folgenden Verfahrensschritte:
1) Injizieren eines oder mehrerer Flutmedien in mindestens eine Injektionsbohrung und Entnahme von Erdöl durch mindestens eine Produktionsbohrung,
2) Blockieren hochpermeabler Zonen der Erdöllagerstätte im Bereich zwischen der mindestens einen Injektionsbohrung und der mindestens einen Produktionsbohrung, indem mindestens eine Formulierung (F) durch die mindestens eine Injektionsbohrung in die Erdöllagerstätte injiziert wird und
3) Fortsetzen des Injizierens eines oder mehrerer Flutmedien in die Injektionsbohrung und Entnahme von Erdöl durch mindestens eine Produktionsbohrung,
wobei die Formulierung (F) 10 bis 99,9 Gew.-% Rohglyzerin (R), 0,1 bis 3 Gew.-% Celluloseether und 0 bis 60 Gew.-% Wasser enthält und die Gew.-%-Angaben jeweils auf das Gesamtgewicht der Formulierung (F) bezogen sind.

Es wurde überraschend gefunden, dass sich die rheologischen und physikalischen Eigenschaften der Formulierung (F) leicht modifizieren und anpassen lassen, durch einfache Variation der Komponentenkonzentrationen, insbesondere der Konzentration von Rohglyzerin (R).

Hierdurch können die Formulierungen (F) auf einfache Weise an die geotechnischen Parameter und Umweltbedingungen, das heißt insbesondere an die Lagerstättentemperatur und die Viskosität des in der Lagerstätte enthaltenen Öls, angepasst werden. Die erfindungsgemäßen Formulierungen (F) sind insbesondere für den Einsatz in Erdöllagerstätten geeignet, die relativ hohe Lagerstättentemperaturen aufweisen (heiße Erdöllagerstätten). Durch den Einsatz von Rohglyzerin (R) kann die Gelbildungstemperatur der Formulierung (F) in breiten Intervallen variiert werden, so dass die Formulierung (F) auch bei der Entwicklung von Erdöllagerstätten eingesetzt werden kann, die eine relativ niedrige Lagerstättentemperaturen aufweisen (kalte Erdöllagerstätten). Ein weiterer Vorteil der erfindungsgemäßen Formulierung (F) liegt darin, dass auch die Gefriertemperatur in breiten Intervallen regelbar ist. Durch Variation der Komponentenanteile, insbesondere der Konzentration des Rohglyzerins (R) lässt sich die Gefriertemperatur wesentlich reduzieren. Hierdurch wird der Einsatz der Formulierung (F) auch bei der Entwicklung von Erdöllagerstätten in kalten Regionen der Erde, beispielsweise in Permafrostgebieten, ermöglicht.

Im Rahmen der vorliegenden Erfindung werden unter kalten Erdöllagerstätten Lagerstätten verstanden, die Temperaturen < 60°C aufweisen. Unter heißen Erdöllagerstätten werden Lagerstätten verstanden, die eine Temperatur von mindestens 60°C aufweisen.

Bei den Formulierungen (F) handelt es sich um Thermogele, das heißt die Viskosität der Formulierungen (F) steigt bei Temperaturerhöhung. Die Formulierungen (F) weisen somit bei niedrigen Temperaturen eine niedrige Viskosität auf, wohingegen ihre Viskosität mit Temperaturerhöhung deutlich ansteigt.

Die Formulierungen (F) sind insbesondere für den Einsatz in heißen Lagerstätten geeignet. Erfindungsgemäß wurde jedoch festgestellt, dass durch den Einsatz von Rohglyzerin (R) die Gelbildungstemperatur der Formulierungen (F) soweit abgesenkt werden kann, dass auch ein Einsatz in kalten Erdöllagerstätten möglich ist.

Glyzerin ist ein dreiwertiger Alkohol (IUPAC Name 1,2,3-Propan-triol) mit der Formel CH₂(OH)-CH(OH)-CH₂(OH). Glyzerin wird petrochemisch aus Propen über die Zwischenprodukte Allylchlorid und Epichlorhydrin hergestellt. Unter Rohglyzerin (R) sollen im Rahmen der vorliegenden Erfindung alle Mischungen verstanden werden, die Glyzerin, Wasser, anorganische Salze und organische Verbindungen (von Glyzerin verschieden) aufweisen. Bevorzugt ist jedoch Rohglyzerin (R), das aus natürlichen Fetten oder Ölen gewonnen wird. Glyzerin ist Bestandteil aller tierischen und pflanzlichen Fette/Öle. Rohglyzerin (R) fällt in großen Mengen als Nebenprodukt der Biodieselherstellung an. Zur Erzeugung von Biodiesel werden pflanzliche Öle, wie beispielsweise Rapsöl, mit Methanol umgeestert. Ein Fett/Öl-Molekül (Triacylglyzerid) wird dabei mit drei Methanolmolekülen zu Glyzerin und drei Fettsäuremethylestern umgesetzt. So ergeben 10 Liter Pflanzenöl und 1 Liter Methanol ca. 10 Liter Biodiesel und 1 Liter Rohglyzerin.

Bevorzugt weist Rohglyzerin (R) die folgende Zusammensetzung auf:
80 bis 90 Gew.-% Glyzerin,
10 bis 20 Gew.-% Wasser,
5 bis 10 Gew.-% anorganische Salze und
0 bis 1 Gew.-% organische Verbindungen, wie Methanol
wobei die Gew.-%-Angaben jeweils auf das Gesamtgewicht des Rohglyzerins (R) bezogen sind.

Besonders bevorzugt ist Rohglyzerin (R) mit der folgenden Zusammensetzung:
80 bis 83 Gew.-% Glyzerin,
10 bis 15 Gew.-% Wasser,
5 bis 7 Gew.-% anorganische Salze enthaltend Natriumchlorid,
wobei die Gew.-%-Angaben jeweils auf das Gesamtgewicht des Rohglyzerins (R) bezogen sind.

Die anorganischen Salze werden auch als Asche bezeichnet. Die Asche stellt dabei den Glührückstand des Rohglyzerins (R) dar.

Das Rohglyzerin (R) kann selbstverständlich weitere Komponenten enthalten, die bei der Herstellung von Rohglyzerin (R) als Verunreinigungen anfallen. Bevorzugt liegt der Gehalt an weiteren Komponenten im Rohglyzerin (R) jedoch unterhalb von 1 Gew.-%, mehr bevorzugt unterhalb von 0,5 Gew.-% und insbesondere unterhalb von 0,1 Gew.-%, jeweils bezogen auf das Gesamtgewicht des Rohglyzerins (R).

Rohglyzerin (R) weist bei 20°C eine Dichte von 1,23 bis 1,27 g pro cm³ auf. Die Viskosität von Rohglyzerin (R) liegt bei 20°C im Bereich von 700 mPa*s bis 1200 mPa*s, wobei die Viskosität des Rohglyzerins (R) vom Wassergehalt und den gegebenenfalls im Rohglyzerin (R) enthaltenen anorganischen Salzen abhängt. Als organische Verbindungen enthält Rohglyzerin (R) bevorzugt Methanol, insbesondere in Konzentrationen im Bereich von 0,01 bis 0,5 Gew.-%, bezogen auf das Gesamtgewicht des Rohglyzerins (R). Als anorganische Salze sind bevorzugt Natriumchlorid und/oder Kalziumchlorid enthalten, insbesondere in Konzentrationen im Bereich von 5 bis 7 Gew.%, bezogen auf das Gesamtgewicht des Rohglyzerins (R). Rohglyzerin (R) hat den Vorteil, dass es toxikologisch unbedenklich ist und biologisch abgebaut wird. Rohglyzerin (R) kann daher auch in ökologisch sensiblen Arealen als Bestandteil einer Formulierung zur Förderung von Erdöl eingesetzt werden.

In den letzten Jahren ist die Produktion von Biodiesel besonders in der europäischen Union rapide gestiegen. Die Produktion von Rohglyzerin (R) hat in der europäischen Union eine Menge von circa 1 Million Tonnen erreicht. Eine sinnvolle Verwertung des bei der Biodieselproduktion anfallenden Rohglyzerins (R) ist eine große, bisher ungelöste ökonomische Aufgabe. Die Erfindung ermöglicht eine sinnvolle Verwertung der bei der Biodieselproduktion anfallenden Abfälle (Rohglyzerin (R)). Rohglyzerin (R) hat zudem den Vorteil, dass es kostengünstig und in großen Mengen verfügbar ist.

Ein weiterer Gegenstand der Erfindung ist die Verwendung von Rohglycerin (R) als Bestandteil einer Formulierung (F) zum Blockieren hochpermeabler Bereiche (Zonen) einer Erdöllagerstätte, insbesondere im Bereich zwischen mindestens einer Injektionsbohrung und mindestens einer Produktionsbohrung der Erdöllagerstätte.

Ein weiterer Gegenstand der Erfindung ist die Verwendung einer Formulierung (F) zum Blockieren hochpermeabler Zonen einer Erdöllagerstätte.

### Formulierung (F)

Die Formulierung (F) enthält Rohglyzerin (R) bevorzugt in Mengen von 10 bis 99,9 Gew.-%, besonders bevorzugt im Bereich von 15 bis 99,9 Gew.-% und insbesondere im Bereich von 30 bis 99,9 Gew.-%.

Die Formulierung (F) kann neben Celluloseethern (0,1 bis 3 Gew.-%) zusätzlich Wasser in Mengen von 0 bis 60 Gew.-% enthalten, jeweils bezogen auf das Gesamtgewicht der Formulierung (F).

Die Formulierung (F) kann darüber hinaus Harnstoff enthalten. In diesem Fall wird die Formulierung (F) im Allgemeinen als wässrige Lösung eingesetzt, die 10 bis 50 Gew.-% Rohglyzerin (R), 0,1 bis 2,5 Gew.-% Celluloseether und 2 bis 40 Gew.-% Harnstoff enthält, jeweils bezogen auf das Gesamtgewicht der Formulierung (F).

Bevorzugt sind Formulierungen (F), die
10 bis 50 Gew.-% Rohglyzerin (R),
0,1 bis 2,5 Gew.-% Celluloseether,
2 bis 40 Gew.-% Harnstoff,
1 bis 60 Gew.-% Wasser sowie
1 bis 20 Gew.-% Natriumchlorid und/oder Kalziumchlorid enthalten,
jeweils bezogen auf das Gesamtgewicht der Formulierung (F).

Von den vorstehend beschriebenen Formulierungen (F) sind solche besonders bevorzugt die mindestens 10 Gew.-% Rohglyzerin (R) enthalten, insbesondere bevorzugt sind solche Formulierungen (F), die 10 bis 40 Gew.-% Rohglyzerin (R) enthalten, jeweils bezogen auf das Gesamtgewicht der Formulierung (F).

Die Formulierung (F) kann darüber hinaus weitere Additive, wie beispielsweise Tenside oder von Celluloseethern verschiedene Polymere enthalten.

Bevorzugt enthält die Formulierung (F) jedoch maximal 1 Gew.-%, besonders bevorzugt maximal 0,5 Gew.-% und insbesondere maximal 0,1 Gew.-% weiterer Additive, jeweils bezogen auf das Gesamtgewicht der Formulierung (F).

Die Gew.-%-Angaben der einzelnen Komponenten der Formulierung (F) werden im Allgemeinen so ausgewählt, dass ihre Summe 100 Gew.-% ergibt. Bevorzugt sind Formulierungen (F), die aus den vorstehend beschriebenen Komponenten bestehen.

Die Gew.-%-Angaben von Wasser sowie gegebenenfalls von Natriumchlorid und/oder Kalziumchlorid in der Formulierung (F) beinhalten nicht die Wassermenge sowie gegebenenfalls die Mengen von Natriumchlorid und/oder Kalziumchlorid, die bereits im Rohglyzerin (R) enthalten sind. Die Gew.-%-Angaben von Wasser sowie Natriumchlorid und/oder Kalziumchlorid in der Formulierung (F) sind als zusätzliche Wasser-und Natriumchlorid-und/oder Kalziumchloridmengen zu verstehen. Zur Berechnung der Gesamtmenge des in der Formulierung (F) enthaltenen Wassermenge sind somit die Wassermenge, die im Rohglyzerin (R) enthalten ist und die zusätzlich zugegebene Wassermenge zu addieren. Zur Berechnung der Gesamtmenge an Natriumchlorid und/oder Kalziumchlorid in der Formulierung (F) sind ebenfalls die im Rohglyzerin (R) enthaltenen Mengen an Natriumchlorid und/oder Kalziumchlorid und die zusätzlich zugegebenen Natriumchlorid-und/oder Kalziumchloridmengen zu addieren.

Durch die zusätzliche Zugabe von Natriumchlorid und/oder Kalziumchlorid wird die Dichte der Formulierung (F) gesteigert. Darüber hinaus lassen sich durch die zusätzliche Zugabe von Natriumchlorid und/oder Kalziumchlorid die rheologischen Eigenschaften der Formulierung (F) modifizieren. Es ist insbesondere möglich, die Gelbildungstemperatur der Formulierung (F) durch die Zugabe von Natriumchlorid und/oder Kalziumchlorid zu reduzieren. Durch die Zugabe der Salze kann die Dichte der Formulierung (F) modifiziert werden und an die Dichte des in der Erdöllagerstätte enthaltenen Erdöls angepasst werden.

### Bevorzugt ist die Zugabe von Kalziumchlorid.

Als Celluloseether können alle bekannten Celluloseether eingesetzt werden, die durch partielle oder vollständige Substitution der Wasserstoffatome der Hydroxylgruppen von Cellulose zugänglich sind. Geeignete Gruppen zur Substitution der Wasserstoffatome sind beispielsweise Alkyl- und/oder Aryl-Gruppen. Die Veretherung der Cellulose wird im Allgemeinen durch Umsetzung mit den jeweiligen Halogeniden (zum Beispiel mit Methyl-, Ethyl-, Propyl- oder Benzylchlorid), mit Epoxiden (wie zum Beispiel Ethylen, Propylen oder Butylenoxid) oder mit aktivierten Olefinen (wie beispielsweise Acrylnitril, Acrylamid oder Vinylsulfonsäure) durchgeführt. Bevorzugt Celluloseether sind beispielsweise Methylcellulose, Methyl-hydroxy-ethylcellulose oder Methyl-hydroxy-propylcellulose sowie Mischungen dieser Celluloseether. Besonders bevorzugt sind Methylcellulose oder Methyl-hydroxy-propylcellulose sowie Mischungen dieser beiden Celluloseether.

Die Formulierung (F) lässt sich vorteilhaft zur Profilmodifikation der Flutfront in Erdöllagerstätten mit Lagerstättentemperaturen im Bereich von 40 bis 150°C einsetzen. Die Formulierung (F) dringt tief in die hochpermeablen Zonen der Erdöllagerstätte ein, bevor die Gelbildung einsetzt. Bei der Gelbildung (Vergelung) der Formulierung (F) bilden sich in der Erdöllagerstätte unbewegliche Gelbänke, die die hochpermeablen Bereiche der Erdöllagerstätte blockieren und eine Profilmodifikation bewirken.

Unter Gel in Bezug auf die Formulierung (F) wird vorliegend verstanden, dass sich die Formulierung unter Ausschluss einer Scherspannung (Scherrate = 0 s⁻¹) beziehungsweise unter Einwirkung von niedrigen Scherraten im Bereich von 0,1 bis 5 s⁻¹ praktisch wie ein Feststoff verhält. Erfindungsgemäß wird die Formulierung (F) dann als Gel bezeichnet, wenn sie beim Kippen eines Becherglases aus diesem während einer Zeitspanne von mindestens 0,25 Stunden bevorzugt mindestens 0,5 Stunden mehr bevorzugt mindestens 1 Stunde und insbesondere bevorzugt mindestens 2 Stunden nicht ausläuft. Die Bestimmung kann durch folgenden einfachen Test erfolgen. In ein 250 ml Becherglas (DIN 12331, ISO 3819) mit einem Außendurchmesser von 70 mm und einer Höhe 95 mm werden 125 ml der Formulierung (F) eingefüllt und auf die gewünschte Temperatur temperiert. Anschließend wird das Becherglas unter Vermeidung von Erschütterungen durch Verkippen um 90° aus der senkrechten Stellung in eine waagrechte Stellung verbracht, wobei die Temperatur beibehalten wird. Anschließend wird die Zeit gemessen, die die Formulierung (F) benötigt, um über den Rand des Becherglases auszutreten.

Die erfindungsgemäßen Formulierungen (F) weisen in vergelter Form in der Regel eine Fließgrenze auf. Die Formulierungen (F) in vergelter Form sind im Allgemeinen strukturviskos, das heißt die Viskosität der Formulierungen (F) in vergelter Form nimmt mit steigender Scherrate ab. Die Viskosität der Formulierungen (F) wird bei Scherraten im Bereich von 0,5 bis 1,5 s⁻¹ gemessen.

Unter Gelbildungstemperatur wird die Temperatur verstanden, bei der die Viskosität der Formulierung (F) schlagartig ansteigt und die Formulierung (F) eine Fließgrenze ausbildet.

Der Anstieg der Viskosität, der die Gelbildungstemperatur anzeigt, kann bestimmt werden, indem man die Viskosität der Formulierung (F) in Abhängigkeit von der Temperatur misst und anschließend die Viskosität über die Temperatur aufträgt. Der Auftrag der Viskosität erfolgt linear in mPa*s. Die Temperatur wird linear aufgetragen in der Einheit °C. Die Gelbildungstemperatur ist durch den Punkt der Kurve definiert, an dem die Viskosität der Formulierung (F) über ein Temperaturintervall von mindestens 10°C mit zunehmender Temperatur zu steigen beginnt.

Unter Gefriertemperatur wird die Temperatur verstanden, bei der die Formulierung (F) erstarrt, das heißt einen Feststoff ausbildet.

### Verfahren zur Herstellung der Formulierung (F)

Gegenstand der vorliegenden Erfindung ist auch ein Verfahren zur Herstellung der erfindungsgemäßen Formulierung (F) umfassend die Schritte:
a) Benetzen eines Celluloseethers mit Wasser, das eine Temperatur im Bereich von 60 bis 80 °C aufweist, unter Erhalt einer Mischung,
b) Zugabe von Wasser mit einer Temperatur von maximal 20°C zu der Mischung aus Schritt a) unter Erhalt einer Lösung und
c) Zugabe von Rohglyzerin (R) zu der Lösung aus Schritt b) unter Erhalt der Formulierung (F),
wobei vor Schritt c) Harnstoff zugegeben wird.

Vor Schritt c) bedeutet dabei, dass Harnstoff vor Schritt a), während Schritt a), während Schritt b), nach Schritt b) und/oder zwischen Schritt a) und Schritt b) zugegeben wird.

Die Menge von Rohglyzerin (R), Harnstoff, Celluloseether und Wasser werden dabei so gewählt, dass die in Schritt c) erhaltene Formulierung (F) die erfindungsgemäßen Konzentrationen aufweist.

Die Zugabe von Harnstoff kann dabei während Schritt a) erfolgen, in einer bevorzugten Ausführungsform wird der Celluloseether zusammen mit Harnstoff vorgelegt und anschließend das Wasser mit einer Temperatur im Bereich von 60 bis 80°C zur Benetzung zugegeben. Es ist auch möglich, den Celluloseether vorzulegen und mit Wasser zu benetzen und den Harnstoff im Anschluss zuzugeben. Es ist auch möglich, zunächst den Celluloseether mit Wasser zu benetzen und den Harnstoff gelöst mit dem Wasser, welches eine Temperatur von maximal 20°C aufweist, in Schritt b) zuzugeben. Darüber hinaus ist es möglich, den Harnstoff nach Schritt b) zuzugeben.

In einer bevorzugten Ausführungsform wird der Celluloseether gemeinsam mit Harnstoff mit warmem Wasser mit einer Temperatur im Bereich von 60 bis 80°C benetzt, wobei das Volumen des warmen Wassers 0,2 V bis 0,5 V beträgt, wobei V das Endvolumen der Formulierung (F) darstellt. Für den Fall, dass die Formulierung (F) zusätzlich Natriumchlorid und/oder Kalziumchlorid enthält, wird bei dem Verfahren zur Herstellung der Formulierung (F) zusätzlich Natriumchlorid und/oder Kalziumchlorid zugegeben, wobei für die Zugabe dieser Salze die Ausführung zur Zugabe von Harnstoff entsprechend gelten. In einer bevorzugten Ausführungsform erfolgt die Zugabe von Salzen wie Natriumchlorid und/oder Kalziumchlorid in Schritt b) zusammen mit der Zugabe von Wasser. In einer besonders bevorzugten Ausführungsform kann Meerwasser oder Formationswasser eingesetzt werden, in dem bereits die angestrebten Mengen von Natriumchlorid und/oder Kalziumchlorid vorhanden sind.

Das erfindungsgemäße Verfahren zur Herstellung der Formulierung (F) hat den Vorteil, dass sich bei Einhaltung der Zugabereihenfolge keine schwerlöslichen Niederschläge bilden. Die Bildung dieser Niederschläge wird insbesondere dadurch verhindert, dass Rohglyzerin (R) als letzte Komponente der Formulierung (F) zugegeben wird. In einer bevorzugten Ausführungsform enthält die Formulierung (F) maximal 45 Gew.-%, mehr bevorzugt maximal 40 Gew.-%, jeweils bezogen auf das Gesamtgewicht der Formulierung (F). Hierdurch kann eine homogene Formulierung (F) erhalten werden. Der Einsatz größerer Mengen an Rohglyzerin (R) ist zwar auch möglich, in diesen Fällen wird jedoch eine inhomogene Lösung erhalten.

### Verfahren zur Förderung von Erdöl aus einer unterirdischen Erdöllagerstätte:

Durch den Einsatz der Formulierung (F) in einem Verfahren zur Förderung von Erdöl aus einer unterirdischen Erdöllagerstätte lässt sich die Verwässerung der Produktion reduzieren und der Entölungsgrad der Erdöllagerstätte steigern.

Gegenstand der vorliegenden Erfindung ist somit auch ein Verfahren zur Förderung von Erdöl aus unterirdischen Erdöllagerstätten, in welche mindestens eine Injektionsbohrung und mindestens eine Produktionsbohrung abgeteuft sind, umfassend mindestens die folgenden Verfahrensschritte:
1) Injizieren eines oder mehrerer Flutmedien in mindestens eine Injektionsbohrung und Entnahme von Erdöl durch mindestens eine Produktionsbohrung,
2) Blockieren hochpermeabler Zonen der Erdöllagerstätte im Bereich zwischen der mindestens einen Injektionsbohrung und der mindestens einen Produktionsbohrung, indem mindestens eine Formulierung (F) durch die mindestens eine Injektionsbohrung in die Erdöllagerstätte injiziert wird und
3) Fortsetzen des Injizierens einer oder mehrerer Flutmedien in die Injektionsbohrung und Entnahme von Erdöl durch mindestens eine Produktionsbohrung.

In einer bevorzugten Ausführungsform bildet die Formulierung (F) in der Erdöllagerstätte ein Gel.

Aufgrund der niedrigen Gelbildungstemperatur der Formulierung (F) kann das erfindungsgemäße Verfahren sowohl für heiße Erdöllagerstätten, als auch für kalte Erdöllagerstätten angewendet werden.

Das erfindungsgemäße Verfahren hat den Vorteil, dass man auch in Lagerstätten mit niedriger Temperatur hochpermeable Zonen gezielt mittels der Formulierung (F) blockieren kann. Das Verfahren ermöglicht, auch abgekühlte (beispielsweise durch Wasserfluten), ausgewaschene Gesteinszonen in der Lagerstätte zu blockieren. Der Abstand zwischen dem Bohrloch (der Injektionsbohrung) und der Gelbank ist bei dem erfindungsgemäßen Verfahren insbesondere durch die Menge an Rohglyzerin (R) regelbar. Hierdurch wird eine effiziente Blockierung hochpermeabler Zonen erreicht, die Verwässerung der Produktion verringert und der Entölungsgrad erhöht.

Bei dem erfindungsgemäßen Verfahren zur Förderung von Erdöl handelt es sich um ein Verfahren zur sekundären oder tertiären Erdölförderung, d.h. es wird angewandt, nachdem die primäre Erdölförderung aufgrund des Eigendrucks der Lagerstätte zum Erliegen gekommen ist und man den Druck in der Lagerstätte durch Einpressen von Wasser und/oder Wasserdampf (sekundäre Förderung) oder durch Einpressen einer wässrigen Polymerlösung (tertiäre Förderung) aufrecht erhalten muss.

### Lagerstätten

Bei den Lagerstätten kann es sich um Lagerstätten für alle Sorten von Öl handeln, beispielsweise um solche für leichtes oder für schweres Öl. In einer Ausführungsform der Erfindung handelt es sich bei den Lagerstätten um Schweröllagerstätten, d.h. Lagerstätten, welche Erdöl mit einem API-Grad von weniger als 22,3° API enthalten.

Zur Ausführung des Verfahrens werden in den Erdöllagerstätten mindestens eine Produktionsbohrung und mindestens eine Injektionsbohrung abgeteuft. In der Regel wird eine Lagerstätte mit mehreren Injektionsbohrungen und mit mehreren Produktionsbohrungen versehen.

Die anfängliche Lagerstättentemperatur - das heißt die Temperatur vor Schritt (2) des erfindungsgemäßen Verfahrens - liegt üblicherweise bei 20 bis 200 °C, bevorzugt bei 30 bis 180 °C, besonders bevorzugt bei 40 bis 150 °C, gemessen an der Injektionsbohrung. Die Lagerstättentemperatur ändert sich durch die Anwendung des erfindungsgemäßen Verfahrens üblicherweise zumindest im Bereich zwischen den Injektionsbohrungen und den Produktionsbohrungen.

### Verfahren

Erfindungsgemäß umfasst das Verfahren mindestens drei Verfahrensschritte (1), (2) und (3), welche in dieser Reihenfolge, aber nicht zwingend unmittelbar nacheinander ausgeführt werden. Das Verfahren kann selbstverständlich noch weitere Verfahrensschritte umfassen, die vor, während oder nach den Schritten (1), (2) und (3) ausgeführt werden können.

### Verfahrensschritt (1)

In einem ersten Verfahrensschritt (1) werden ein oder mehrere Flutmedien wie Stickstoff, Kohlendioxid, Wasser und Wasser, das übliche, dem Fachmann bekannte Additive wie Verdicker und Tenside enthält, bevorzugt Wasser oder Wasser enthaltend Additive, in die mindestens eine Injektionsbohrung injiziert und Erdöl durch mindestens eine Produktionsbohrung entnommen. Mit dem Begriff "Erdöl" ist in diesem Zusammenhang selbstverständlich nicht phasenreines Öl gemeint, sondern gemeint sind die üblichen, Öl und Formationswasser umfassenden Emulsionen, welche aus Erdöllagerstätten gefördert werden.

Das bevorzugt als Flutmedium injizierte Wasser hat üblicherweise eine Temperatur von 5 bis 60 °C, bevorzugt von 5 bis 50 °C und besonders bevorzugt von 5 bis 40 °C.

Durch die Injektion von Wasser bildet sich im Bereich zwischen der Injektions- und der Förderbohrung (Produktionsbohrung) eine Zone aus, in der Öl durch Wasser verdrängt wird.

Durch die Injektion von Flutmedien wie Wasser kann sich die ursprüngliche Lagerstättentemperatur ändern, das heißt sie kann erhöht oder erniedrigt werden, je nachdem, ob das injizierte Flutmedium eine höhere oder niedrigere Temperatur als die ursprüngliche Temperatur der Lagerstätte aufweist.

Durch die Injektion eines Flutmediums wie Wasser steigt der Druck in der Lagerstätte und es bilden sich im Bereich zwischen der Injektions- und der Produktionsbohrung Zonen aus, in der Öl durch das Flutmedium verdrängt wird.

Durch die natürliche Inhomogenität der Permeabilität der Lagerstätte bilden sich in gewisser Zeit zwischen dem Injektor (Injektionsbohrung) und Produzenten (Produktionsbohrung) die "ausgewaschenen" Zonen, die hohe Permeabilität aufweisen. Diese Zonen können unterschiedlichste Geometrie und Ausmaßen haben und sind sehr schwer zu prognostizieren. Oft sind diese Zonen an die kleinen geologischen Störungen, die mit konventionellen Messmethoden und Messgeräten nicht zu entdecken sind, oder an bestimmte Gesteinsschichten anberaumt.

Wenn die Produktionsverwässerung relativ schnell nach dem Beginn des Wasserflutens steigt, ist dies ein eindeutiges Indiz für einen Wasserdurchbruch.

### Verfahrensschritt (2)

Verfahrensschritt (2) kann angewandt werden, sobald die Produktion zu stark verwässert wird oder ein sogenannter Wasserdurchbruch registriert wird. Das ist in der Regel dann der Fall, wenn aus der Produktionsbohrung ein Gemisch entnommen wird, das mehr als 70 Gew.-%, besonders mehr als 90 Gew.-% Lagerstättenwasser enthält, bezogen auf das Gesamtgewicht des aus der Produktionsbohrung entnommenen Gemischs. Bei einem Wasserdurchbruch strömt Wasser durch hochpermeable Zonen von der Injektionsbohrung bis zur Produktionsbohrung. Hoch permeable Zonen müssen aber nicht zwingend durch das Wasserfluten erzeugt werden, sondern können auch natürlicherweise in einer Formation vorhanden sein. Weiterhin ist es möglich, dass permeable Zonen bereits in einem dem erfindungsgemäßen Verfahren vorausgehenden Verfahrensschritt geschaffen wurden.

Zur Vorbereitung von Verfahrensschritt (2) kann es vorteilhaft sein, die Temperatur im Bereich der Injektionsbohrung zu messen und das Temperaturfeld der Lagerstätte im Bereich, der unter Einfluss des Flutens steht, zu bestimmen. Methoden zur Ermittlung des Temperaturfeldes einer Erdöllagerstätte sind dem Fachmann prinzipiell bekannt. Die Temperaturverteilung wird in der Regel aus Temperaturmessungen an bestimmten Stellen der Formation in Kombination mit Simulationsrechnungen vorgenommen, wobei man bei den Simulationsrechnungen unter anderem in die Formation eingebrachte Wärmemengen sowie die aus der Formation abgeführten Wärmemengen berücksichtigt. Alternativ kann jeder der Bereiche auch durch seine Durchschnittstemperatur charakterisiert werden. Für den Fachmann ist klar, dass die geschilderte Analyse der Temperaturfeldes nur eine Annäherung der tatsächlichen Verhältnisse in der Formation darstellt.

Der Verfahrensschritt (2) kann unmittelbar nach Verfahrensschritt (1) durchgeführt werden.

Im Zuge von Verfahrensschritt (2) werden hoch permeabler Zonen der Erdöllagerstätte im Bereich zwischen den Injektionsbohrungen und den Produktionsbohrungen durch Injizieren der Formulierung (F) durch die mindestens eine Injektionsbohrung blockiert.

Erfindungsgemäß wird hierzu mindestens eine Formulierung (F) verwendet. Es ist auch möglich, nacheinander zwei oder mehrere Formulierungen (F) zu injizieren, die sich in ihrer Zusammensetzung unterscheiden.

Erfindungsgemäß wird in Verfahrensschritt (2) die Formulierung (F) durch eine oder mehrerer Injektionsbohrungen in die Erdöllagerstätte injiziert. Nach dem Injizieren der Formulierung (F) kann gegebenenfalls noch mit Wasser nachgeflutet werden, um die Formulierung (F) weiter in die Erdöllagerstätte zu verdrängen. Im Rahmen der vorliegenden Erfindung wird als Nachfluten das Wasservolumen bezeichnet, dass direkt nach dem Injizieren der Formulierung (F) injiziert wird, um die Formulierung (F) unter Tage an die gewünschte Stelle der Erdöllagerstätte zu bringen. Nach dem Nachfluten wird üblicherweise für ein bis drei Tage eine Flutpause eingelegt.

Um die Vergelung (Gelbildung der Formulierung (F) in der Erdöllagerstätte nicht durch Scherspannungen zu stören, kann nach dem Injizieren der Formulierung (F) (Verfahrensschritt (2)) eine Flutpause eingelegt werden, um die Gelbildung zu unterstützen.

Dies bedeutet, dass zwischen der Beendigung des Verfahrensschritt (2) und der Fortführung des Injizierens einer oder mehrerer Flutmedien (Verfahrensschritt (3)) eine Pause von ein bis drei Tagen eingelegt werden kann. Für den Fall, dass die Formulierung (F) durch Nachfluten mit Wasser unter Tage weiter in die Erdöllagerstätte eingepresst wird, kann nach dem Nachfluten und vor der Fortsetzung des Injizierens einer oder mehrerer Flutmedien gemäß Verfahrensschritt (3) ebenfalls eine Flutpause von ein bis drei Tagen eingelegt werden.

### Verfahrensschritt (3)

Im Anschluss an Verfahrensschritt (2) sowie gegebenenfalls nach dem Nachfluten wird die Erdölförderung im Verfahrensschritt (3) durch mindestens eine Produktionsbohrung fortgesetzt. Dies kann sofort im Anschluss an Verfahrensschritt (2) erfolgen. Es ist auch möglich, mit der Durchführung des Verfahrensschritts (3) ein bis drei Tage zu warten, um die Gelbildung der Formulierung (F) in der Erdöllagerstätte zu unterstützen. Die Ölförderung gemäß Verfahrensschritt (3) kann nach üblichen Methoden durchgeführt werden, beispielsweise durch Einpressen eines oder mehrerer Flutmedien durch mindestens eine Injektionsbohrung in die Erdöllagerstätte, wobei Rohöl aus der mindestens eine Produktionsbohrung entnommen wird. Das Flutmedium kann insbesondere aus dem für Verfahrensschritt (1) als geeignet aufgeführten Flutmedien ausgewählt werden. Bevorzugt wird Wasser und/oder Additive enthaltendes Wasser als Flutmedium eingesetzt. Es ist auch möglich, Meerwasser oder teilentsalztes Meerwasser einzusetzen. Darüber hinaus kann als Flutmedium in Verfahrensschritt (3) auch Wasser eingesetzt werden, dass aus der Erdöllagerstätte gefördert wurde (sogenanntes Lagerstättenwasser oder Formationswasser). Meerwasser, teilentsalztes Meerwasser und Lagerstättenwasser können auch als Flutmedium in Verfahrensschritt (1) eingesetzt werden.

Bei der mindestens einen Injektionsbohrung, durch die in Verfahrensschritt (3) das Flutmedium eingepresst wird, kann es sich um die bereits zum Injizieren der Formulierung (F) verwendete Injektionsbohrung handeln. Es ist auch möglich, das Flutmedium im Verfahrensschritt (3) durch eine andere geeignete Injektionsbohrung einzupressen. Darüber hinaus ist es möglich, das Flutmedium in Verfahrensschritt (3) durch die in Verfahrensschritt (2) verwendete Injektionsbohrung und weitere Injektionsbohrungen in die Erdöllagerstätte zu injizieren.

Die Erdölförderung kann selbstverständlich auch mittels anderer, dem Fachmann bekannter Methoden, fortgesetzt werden. Beispielsweise kann man als Flutmedium auch wässrige Lösungen silikathaltiger Stoffe oder verdickender Polymere einsetzen (tertiäre Förderung). Hierbei kann es sich um synthetische Polymere wie beispielsweise Polyacrylamid oder Acrylamid umfassende Polymere handeln. Darüber hinaus ist es auch möglich Biopolymere einzusetzen, wie beispielsweise Polysaccharide.

Es ist auch möglich, im Anschluss an Verfahrensschritt (3) nochmals die Verfahrensschritte (2) und (3) durchzuführen. Dies kann in regelmäßigen Abständen erfolgen, beispielsweise einmal pro Jahr. In der Regel wird Verfahrensschritt (2) wiederholt, wenn bei der Erdölförderung in Verfahrensschritt (3) aus der Produktionsbohrung ein Wasserdurchbruch registriert wird. Insbesondere wird Verfahrensschritt (2) wiederholt, wenn bei der Erdölförderung in Verfahrensschritt (3) die kritische Produktionsverwässerung erreicht wird. Diese liegt üblicherweise vor, wenn die Produktionsverwässerung über 70 bis 90 Gew.-% liegt. Dies bedeutet, dass aus der Produktionsbohrung ein Gemisch entnommen wird, dass 70 bis 90 Gew.-% Lagerstättenwasser enthält, bezogen auf das Gesamtgewicht der aus der Produktionsbohrung entnommenen Mischung.

### Vorteile

Das erfindungsgemäße Verfahren zur Erdölförderung hat die folgenden Vorteile. Die in der Formulierung (F) enthaltenen Komponenten sind biologisch abbaubar und ökologisch weitestgehend unbedenklich. Durch den Einsatz von Rohglyzerin (R) lässt sich die Gelbildungstemperatur der Formulierung (F) in weiten Bereichen regeln, so dass die Formulierung (F) auch in Erdöllagerstätten eingesetzt werden kann, die für den Einsatz der im Stand der Technik beschriebenen Thermogele nicht geeignet sind. Das erfindungsgemäße Verfahren zur Förderung von Erdöl ermöglicht die Blockierung permeabler Bereiche und Kanäle in der Erdöllagerstätte, wodurch der Wasserdurchbruch blockiert wird. Dies ist auch in relativ großem Abstand von der Injektionsbohrung möglich. Mit dem erfindungsgemäßen Verfahren lässt sich darüber hinaus die Gelbildung in der Injektionsbohrung weitestgehend verhindern, wodurch die Sicherheit der Erdölförderung gesteigert wird. Das erfindungsgemäße Verfahren ist darüber hinaus kostengünstig, insbesondere durch den Einsatz von Rohglyzerin (R) und erlaubt eine effiziente Proflimodifikation auch in Erdöllagerstätten mit relativ niedrigen Temperaturen.

Die Erfindung wird nachfolgend anhand der folgenden Ausführungsbeispiele näher erläutert.

### Beispiel 1

Nachfolgend werden die physikalischen und rheologischen Eigenschaften wässriger Formulierungen gezeigt (Tabelle 1).

Die Formulierungen der Nr. 1, 2 und 3 stellen nicht erfindungsgemäße Formulierungen dar (Vergleichsbeispiele). Die Formulierungen der Nr. 4 und 5 stellen erfindungsgemäße Formulierungen (F) dar.

Die Formulierungen wurden nach dem erfindungsgemäßen Verfahren hergestellt, das heißt, Methylcellulose und Harnstoff wurden vorgelegt und mit warmem Wasser benetzt. Anschließend wurde unter Rühren kaltes Wasser zugegeben. Anschließend wurde Rohglyzerin (R) zugegeben.

**Tabelle 1**

| Nr. | Zusammensetzung | Dichte bei | pH | Viskosität bei | Gelbildungtemperatur |
|---|---|---|---|---|---|
| | [Gew.-%] | 20°C g/cm³ | | 20°C [mPa*s] | [°C] |
| 1 | 1 Culminal MC 2000S | 1,012 | 7,2 | 28,6 | 73 |
| | 2 Harnstoff | | | | |
| 2 | 1 Culminal MC 2000S | 1,034 | 7,4 | 34,0 | 79 |
| | 10 Harnstoff | | | | |
| 3 | 1 Culminal MC 2000S | 1,056 | 7,6 | 39,8 | 88 |
| | 20 Harnstoff | | | | |
| 4 | 1 Culminal MC 2000S | 1,118 | 7,3 | 57,2 | 57 |
| | 10 Harnstoff | | | | |
| | 35 Rohglyzerin (R) | | | | |
| 5 | 1 Culminal MC 2000S | 1,147 | 7,7 | 75,6 | 60 |
| | 20 Harnstoff | | | | |
| | 35 Rohglyzerin | | | | |

Die Formulierungen der Nr. 1 bis 5 enthalten Wasser, jeweils die Differenz der angegebenen Komponenten zu 100 Gew.-%.

Als Methylcellulose wurde Culminal MC 2000S des Herstellers Aqualon eingesetzt.

Die erfindungsgemäßen Formulierungen (F) Nr. 4 und 5 zeigen, dass durch den Einsatz von Rohglyzerin (R) die Gelbildungstemperatur deutlich abgesenkt werden kann. Die Viskositäten der Formulierungen wurden auf einem Haake RheoStress MCR 301 bei einer Scherrate von 0,5 bis 1,5 s⁻¹ gemessen.

Als Rohglyzerin (R) wurde ein Rohglyzerin mit der folgenden Zusammensetzung eingesetzt:

| | |
|---|---|
| Glyceringehalt: | 82,3 % |
| Wasser: | 10,5 % |
| Salze, NaCl, als Asche: | 6,0% |
| Natriumgehalt: | 2,2 % |
| Methanolgehalt: | 0,0 % |
| Dichte: | 1,240 g/cm³ |

Als Asche wird vorliegend der Glührückstand bezeichnet.

### Beispiel 2

In Tabelle 2 sind die physikalischen und rheologischen Eigenschaften von Formulierungen (F) gemäß der Erfindung gezeigt. Zur Herstellung der Formulierungen (F) Nr. 6, 7, 8 und 9 wurde jeweils 1 g Culminal MC 2000S zusammen mit der angegebenen Menge Harnstoff vorgelegt. Harnstoff und Cellulose wurde nachfolgend mit 10 bis 20 g Wasser benetzt, das eine Temperatur von 65°C aufwies. Die Komposition wurde gerührt, bis sich eine homogene Mischung ausgebildet hatte. Anschließend wurde kaltes Wasser (34 bis 44 g) unter Rührung zu dieser Mischung hinzugefügt. Das kalte Wasser wies eine Temperatur von 17°C auf. Das Rühren wurde so lange fortgesetzt, bis sich alle Komponenten in Wasser aufgelöst hatten. Anschließend wurde ebenfalls unter Rühren 35 g Rohglyzerin (R) zugegeben. Nach diesem Verfahren wurden die nachfolgenden erfindungsgemäßen Formulierungen (F) Nr. 6, 7, 8 und 9 hergestellt. Die Zusammensetzung, Dichte, pH-Wert und Viskosität der Lösung bei 20°C sind in der nachfolgenden Tabelle 2 wiedergegeben.

**Tabelle 2**

| Nr. | Zusammensetzung | Dichte bei 20°C | pH | Viskosität bei 20°C |
|---|---|---|---|---|
| | [Gew.-%] | [g/cm³] | | [mPa*s] |
| 6 | 1 Culminal MC 2000S | | | |
| | 10 Harnstoff | 1,118 | 7,25 | 57,2 |
| | 35 Rohglyzerin (R) | | | |
| | 54 Wasser | | | |
| 7 | 1 Culminal MC 2000S | | | |
| | 20 Harnstoff | 1,147 | 7,7 | 75,6 |
| | 35 Rohglyzerin (R) | | | |
| | 44 Wasser | | | |
| 8 | 1 Culminal MC 2000S | | | |
| | 10 Harnstoff | 1,130 | 7,4 | 63,0 |
| | 40 Rohglyzerin (R) | | | |
| | 49 Wasser | | | |
| 9 | 1 Culminal MC 2000S | | | |
| | 20 Harnstoff | 1,160 | 7,6 | 87,4 |
| | 40 Rohglyzerin (R) | | | |
| | 39 Wasser | | | |

Die Viskosität der Formulierungen (F) wurde auf einem Haake RheoStress MCR 301 bei einer Scherrate im Bereich von 0,5 bis 1,5 s⁻¹ gemessen.

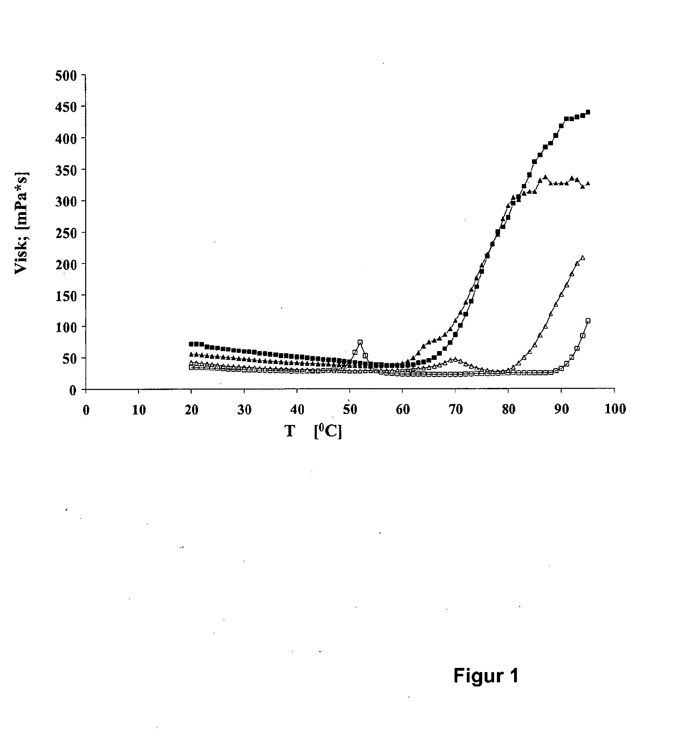

Die Abbildung gemäß Figur 1 zeigt den Einfluss von Rohglyzerin (R) auf die Gelbildungstemperatur. Auf der Ordinate (Y-Achse) ist die Viskosität (Visk.) in mPa*s angegeben auf der Abszisse (X-Achse) ist die Temperatur in °C angegeben. Die Kurve mit den schwarz ausgefüllten Dreiecken zeigt den Viskositätsverlauf einer Formulierung (F) die 1 Gew.-% Culminal MC 2000S, 10 Gew.-% Harnstoff, 35 Gew.-% Rohglyzerin (R) und 54 Gew.-% Wasser enthält. Die Kurve mit den schwarz ausgefüllten Quadraten zeigt eine Formulierung (F) die 1 Gew.-% Culminal MC 2000S, 20 Gew.-% Harnstoff und 35 Gew.-% Rohglyzerin (R) enthält. Die Kurven mit dem nicht ausgefüllten Dreieck und dem nicht ausgefüllten Quadrat zeigen nicht erfindungsgemäße Formulierungen, bei denen das Rohglyzerin (R) durch Wasser ersetzt wurde. In den Kurven in Figur 1 ist die Gelbildungstemperatur deutlich erkennbar. Die Gelbildungstemperatur ist durch die Temperatur gekennzeichnet, ab der die Viskosität über eine Temperaturintervall von mindestens 10°C eine positive Steigung aufweist. Aus den Viskositätskurven in Figur 1 ist deutlich ersichtbar, dass der Einsatz von Rohglyzerin (R) zu einer deutlichen Herabsetzung der Gelbildungstemperatur führt.

## Patentansprüche

1. Verfahren zur Förderung von Erdöl aus unterirdischen Erdöllagerstätten, in welche mindestens eine Injektionsbohrung und mindestens eine Produktionsbohrung abgeteuft sind, umfassend mindestens die folgenden Verfahrensschritte:
1) Injizieren eines oder mehrerer Flutmedien in mindestens eine Injektionsbohrung und Entnahme von Erdöl durch mindestens eine Produktionsbohrung,
2) Blockieren hochpermeabler Zonen der Erdöllagerstätte im Bereich zwischen der mindestens einen Injektionsbohrung und der mindestens einen Produktionsbohrung, indem mindestens eine Formulierung (F) durch die mindestens eine Injektionsbohrung in die Erdöllagerstätte injiziert wird und
3) Fortsetzen des Injizierens eines oder mehrerer Flutmedien in die Injektionsbohrung und Entnahme von Erdöl durch mindestens eine Produktionsbohrung,
wobei die Formulierung (F) 10 bis 99,9 Gew.-% Rohglyzerin (R), 0,1 bis 3 Gew.-% Celluloseether und 0 bis 60 Gew.-% Wasser enthält und die Gew.-%-Angaben jeweils auf das Gesamtgewicht der Formulierung (F) bezogen sind, wobei das Rohglyzerin (R) die folgende Zusammensetzung aufweist:
80 bis 90 Gew.-% Glyzerin,
10 bis 20 Gew.-% Wasser,
0 bis 10 Gew.-% anorganische Salze und
0 bis 1 Gew.-% organische Verbindungen,
wobei die Gew.-%-Angaben jeweils auf das Gesamtgewicht des Rohglyzerins (R) bezogen sind und wobei die Formulierung (F) in den hochpermeablen Zonen der Erdöllagerstätte ein Gel ausbildet.

2. Verfahren gemäß Anspruch 1, **dadurch gekennzeichnet, dass** die Formulierung (F)
10 bis 50 Gew.-% Rohglyzerin (R),
0,1 bis 2,5 Gew.% Celluloseether,
2 bis 40 Gew.-% Harnstoff und
1 bis 60 Gew.-% Wasser enthält,
wobei die Gew.-%-Angaben jeweils auf das Gesamtgewicht der Formulierung (F) bezogen sind.

3. Verfahren gemäß Anspruch 1 oder 2, **dadurch gekennzeichnet, dass** die Formulierung (F) zusätzlich 1 bis 20 Gew.-% Natriumchlorid und/oder Kalziumchlorid enthält.

4. Verfahren gemäß einem der Ansprüche 1 bis 3, **dadurch gekennzeichnet, dass** das Rohglyzerin (R) die folgende Zusammensetzung aufweist:
80 bis 82 Gew.-% Glyzerin,
10 bis 15 Gew.-% Wasser,
5 bis 7 Gew.-% Natriumchlorid und
0,01 bis 0,5 Gew.-% Methanol,
wobei die Gew.-%-Angaben jeweils auf das Gesamtgewicht des Rohglyzerins (R) bezogen sind.

5. Verfahren gemäß einem der Ansprüche 1 bis 4, **dadurch gekennzeichnet, dass** die Formulierung (F) 10 bis 40 Gew.-% Rohglyzerin (R) enthält.

6. Verfahren gemäß einem der Ansprüche 1 bis 5, **dadurch gekennzeichnet, dass** der Celluloseether Methylcellulose, Methylhydroxy-propylcellulose oder eine Mischung aus Methylcellulose und Methylhydroxy-propylcellulose ist.

7. Verwendung einer Formulierung (F) enthaltend
10 bis 50 Gew.-% Rohglyzerin (R),
0,1 bis 2,5 Gew.% Celluloseether,
2 bis 40 Gew.-% Harnstoff und
1 bis 60 Gew.-% Wasser
zum Blockieren hochpermeabler Zonen einer Erdöllagerstätte, wobei das Rohglyzerin (R) die folgende Zusammensetzung aufweist:
80 bis 90 Gew.-% Glyzerin,
10 bis 20 Gew.-% Wasser,
0 bis 10 Gew.-% anorganische Salze und
0 bis 1 Gew.-% organische Verbindungen,
wobei die Gew.-%-Angaben jeweils auf das Gesamtgewicht des Rohglyzerins (R) bezogen sind.

8. Verfahren zur Herstellung der Formulierung (F) gemäß Anspruch 7, umfassend die Schritte:
a) Benetzen eines Celluloseethers mit Wasser, das eine Temperatur im Bereich von 60 bis 80 °C aufweist, unter Erhalt einer Mischung,
b) Zugabe von Wasser mit einer Temperatur von maximal 20°C zu der Mischung aus Schritt a) unter Erhalt einer Lösung und
c) Zugabe von Rohglyzerin (R) zu der Lösung aus Schritt b) unter Erhalt der Formulierung (F),
wobei vor Schritt c) Harnstoff zugegeben wird.

9. Verfahren gemäß Anspruch 8, **dadurch gekennzeichnet, dass** das Volumen des in Schritt a) eingesetzten Wassers 0,2 bis 0,5 V beträgt, wobei V das Endvolumen der Formulierung (F) ist.

10. Verfahren gemäß Anspruch 8 oder 9, **dadurch gekennzeichnet, dass** in Schritt a) Celluloseether zusammen mit Harnstoff vorgelegt wird.

11. Verfahren gemäß Anspruch 8 oder 10, **dadurch gekennzeichnet, dass** der Harnstoff gelöst mit dem Wasser in Schritt b) zugegeben wird.

12. Formulierung (F) enthaltend
10 bis 50 Gew.-% Rohglyzerin (R),
0,1 bis 2,5 Gew.% Celluloseether,
2 bis 40 Gew.-% Harnstoff und
1 bis 60 Gew.-% Wasser,
wobei die Gew.-%-Angaben jeweils auf das Gesamtgewicht der Formulierung (F) bezogen sind und wobei das Rohglyzerin (R) die folgende Zusammensetzung aufweist:
80 bis 90 Gew.-% Glyzerin,
10 bis 20 Gew.-% Wasser,
0 bis 10 Gew.-% anorganische Salze und
0 bis 1 Gew.-% organische Verbindungen,
wobei die Gew.-%-Angaben jeweils auf das Gesamtgewicht des Rohglyzerins (R) bezogen sind.

## Claims

1. A process for producing mineral oil from underground mineral oil deposits into which at least one injection well and at least one production well have been sunk, comprising at least the following process steps:
1) injecting one or more flooding media into at least one injection well and withdrawing mineral oil through at least one production well,
2) blocking high-permeability zones of the mineral oil deposit in the region between the at least one injection well and the at least one production well by injecting at least one formulation (F) into the mineral oil deposit through the at least one injection well, and
3) continuing the injection of one or more flooding media into the injection well and withdrawing mineral oil through at least one production well,
where the formulation (F) comprises 10 to 99.9% by weight of crude glycerol (CG), 0.1 to 3% by weight of cellulose ether and 0 to 60% by weight of water and the percentages by weight are each based on the total weight of the formulation (F), where the crude glycerol (CG) has the following composition:
80 to 90% by weight of glycerol,
10 to 20% by weight of water,
0 to 10% by weight of inorganic salts and
0 to 1% by weight of organic compounds,
where the percentages by weight are each based on the total weight of the crude glycerol (CG) and where the formulation (F) forms a gel in the high-permeability zones of the mineral oil deposit.

2. The process according to claim 1, wherein the formulation (F) comprises
10 to 50% by weight of crude glycerol (CG),
0.1 to 2.5% by weight of cellulose ether,
2 to 40% by weight of urea and
1 to 60% by weight of water,
where the percentages by weight are each based on the total weight of the formulation (F).

3. The process according to claim 1 or 2, wherein the formulation (F) additionally comprises 1 to 20% by weight of sodium chloride and/or calcium chloride.

4. The process according to any of claims 1 to 3, wherein the crude glycerol (CG) has the following composition:
80 to 82% by weight of glycerol,
10 to 15% by weight of water,
5 to 7% by weight of sodium chloride and
0.01 to 0.5% by weight of methanol,
where the percentages by weight are each based on the total weight of the crude glycerol (CG).

5. The process according to any of claims 1 to 4, wherein the formulation (F) comprises 10 to 40% by weight of crude glycerol (CG).

6. The process according to any of claims 1 to 5, wherein the cellulose ether is methyl cellulose, methyl hydroxypropyl cellulose or a mixture of methyl cellulose and methyl hydroxypropyl cellulose.

7. The use of a formulation (F) comprising
10 to 50% by weight of crude glycerol (CG),
0.1 to 2.5% by weight of cellulose ether,
2 to 40% by weight of urea and
1 to 60% by weight of water,
for blocking high-permeability zones of a mineral oil deposit, where the crude glycerol (CG) has the following composition:
80 to 90% by weight of glycerol,
10 to 20% by weight of water,
0 to 10% by weight of inorganic salts and
0 to 1% by weight of organic compounds,
where the percentages by weight are each based on the total weight of the crude glycerol (CG).

8. A process for producing the formulation (F) according to claim 7, comprising the steps of:
a) wetting a cellulose ether with water having a temperature in the range from 60 to 80°C to obtain a mixture,
b) adding water having a maximum temperature of 20°C to the mixture from step a) to obtain a solution and
c) adding crude glycerol (CG) to the solution from step b) to obtain the formulation (F),
with addition of urea prior to step c).

9. The process according to claim 8, wherein the volume of the water used in step a) is 0.2 to 0.5 V where V is the final volume of the formulation (F).

10. The process according to claim 8 or 9, wherein cellulose ether is initially charged together with urea in step a).

11. The process according to claim 8 or 10, wherein the urea is added dissolved with the water in step b).

12. A formulation (F) comprising
10 to 50% by weight of crude glycerol (CG),
0.1 to 2.5% by weight of cellulose ether,
2 to 40% by weight of urea and
1 to 60% by weight of water,
where the percentages by weight are each based on the total weight of the formulation (F) and wherein the crude glycerol (CG) has the following composition:
80 to 90% by weight of glycerol,
10 to 20% by weight of water,
0 to 10% by weight of inorganic salts and
0 to 1% by weight of organic compounds,
where the percentages by weight are each based on the total weight of the crude glycerol (CG).

## Revendications

1. Procédé pour l'extraction de pétrole de gisements souterrains de pétrole, dans lesquels sont creusés au moins un trou d'injection et au moins un trou de production, comprenant au moins les étapes de procédé suivantes :
1) injection d'un ou de plusieurs agents d'inondation dans au moins un trou d'injection et prélèvement de pétrole via au moins un trou de production,
2) blocage de zones hautement perméables du gisement de pétrole dans la zone entre ledit au moins un trou d'injection et ledit au moins un trou de production, en ce qu'on injecte au moins une formulation (F) via ledit au moins un trou d'injection dans le gisement de pétrole et
3) continuation de l'injection d'un ou de plusieurs agents d'inondation dans le trou d'injection et prélèvement de pétrole via au moins un trou de production,
la formulation (F) contenant 10 à 99,9% en poids de glycérol brut (R), 0,1 à 3% en poids d'éther de cellulose et 0 à 60% en poids d'eau et les indications de % en poids se rapportant à chaque fois au poids total de la formulation (F), le glycérol brut (R) présentant la composition suivante :
80 à 90% en poids de glycérol,
10 à 20% en poids d'eau,
0 à 10% en poids de sels inorganiques et
0 à 1% en poids de composés organiques,
les indications de % en poids se rapportant à chaque fois au poids total du glycérol brut (R) et la formulation (F) formant un gel dans les zones hautement perméables du gisement de pétrole.

2. Procédé selon la revendication 1, **caractérisé en ce que** la formulation (F) contient
10 à 50% en poids de glycérol brut (R),
0,1 à 2,5% en poids d'éther de cellulose,
2 à 40% en poids d'urée et
1 à 60% en poids d'eau,
les indications de % en poids se rapportant à chaque fois au poids total de la formulation (F).

3. Procédé selon la revendication 1 ou 2, **caractérisé en ce que** la formulation (F) contient en outre 1 à 20% en poids de chlorure de sodium et/ou de chlorure de calcium.

4. Procédé selon l'une quelconque des revendications 1 à 3, **caractérisé en ce que** le glycérol brut (R) présente la composition suivante : 80 à 82% en poids de glycérol,
10 à 15% en poids d'eau,
5 à 7% en poids de chlorure de sodium et
0,01 à 0,5% en poids de méthanol,
les indications de % en poids se rapportant à chaque fois au poids total du glycérol brut (R).

5. Procédé selon l'une quelconque des revendications 1 à 4, **caractérisé en ce que** la formulation (F) contient 10 à 40% en poids de glycérol brut (R).

6. Procédé selon l'une quelconque des revendications 1 à 5, **caractérisé en ce que** l'éther de cellulose est la méthylcellulose, la méthylhydroxypropylcellulose ou un mélange de méthylcellulose et de méthylhydroxypropylcellulose.

7. Utilisation d'une formulation (F), contenant 10 à 50% en poids de glycérol brut (R),
0,1 à 2,5% en poids d'éther de cellulose,
2 à 40% en poids d'urée et
1 à 60% en poids d'eau
pour le blocage de zones hautement perméables d'un gisement de pétrole, le glycérol brut (R) présentant la composition suivante :
80 à 90% en poids de glycérol,
10 à 20% en poids d'eau,
0 à 10% en poids de sels inorganiques et
0 à 1% en poids de composés organiques,
les indications de % en poids se rapportant à chaque fois au poids total du glycérol brut (R).

8. Procédé pour la préparation de la formulation (F) selon la revendication 7, comprenant les étapes de
a) mouillage d'un éther de cellulose avec de l'eau qui présente une température dans la plage de 60 à 80°C avec obtention d'un mélange,
b) addition d'eau présentant une température d'au maximum 20°C au mélange de l'étape a) avec obtention d'une solution et
c) addition de glycérol brut (R) à la solution de l'étape b) avec obtention de la formulation (F),
de l'urée étant ajoutée avant l'étape c).

9. Procédé selon la revendication 8, **caractérisé en ce que** le volume de l'eau utilisée dans l'étape a) est de 0,2 à 0,5 V, V étant le volume final de la formulation (F).

10. Procédé selon la revendication 8 ou 9, **caractérisé en ce que** l'éther de cellulose est disposé au préalable ensemble avec l'urée dans l'étape a).

11. Procédé selon la revendication 8 ou 10, **caractérisé en ce que** l'urée est ajoutée sous forme dissoute avec l'eau dans l'étape b).

12. Formulation(F) contenant
10 à 50% en poids de glycérol brut (R),
0,1 à 2,5% en poids d'éther de cellulose,
2 à 40% en poids d'urée et
1 à 60% en poids d'eau,
les indications de % en poids se rapportant à chaque fois au poids total de la formulation (F) et le glycérol brut (R) présentant la composition suivante : 80 à 90% en poids de glycérol,
10 à 20% en poids d'eau,
0 à 10% en poids de sels inorganiques et
0 à 1% en poids de composés organiques,
les indications de % en poids se rapportant à chaque fois au poids total du glycérol brut (R).
